# FASCICULE DE BREVET EUROPEEN

(11) **EP 3 846 530 B1**
(45) Date de publication et mention de la délivrance du brevet: **05.04.2023**
(21) Numéro de dépôt: 20217779.6
(22) Date de dépôt: 30.12.2020
(51) Int. Cl.: H04W 28/02, H04W 40/02, H04W 40/26, H04W 84/18

(54) **PROCÉDÉ D'OPTIMISATION D'UN RÉSEAU DE COMMUNICATION ET DISPOSITIFS ASSOCIÉS**
VERFAHREN ZUR OPTIMIERUNG EINES KOMMUNIKATIONSNETZES, UND ENTSPRECHENDE VORRICHTUNGEN
METHOD FOR OPTIMISING A COMMUNICATION NETWORK AND ASSOCIATED DEVICES

(30) Priorité: 30.12.2019 FR 1915727
(43) Date de publication de la demande: 07.07.2021
(73) Titulaire: THALES, 92400 Courbevoie (FR)
(72) Inventeur: KESSAB, Achraf, 92622 GENNEVILLIERS CEDEX (FR); SOULIÉ, Antoine, 92622 GENNEVILLIERS CEDEX (FR); SAMARAN, Alice, 92622 GENNEVILLIERS CEDEX (FR); MAZIERE-TAURAN, Frédéric, 92622 GENNEVILLIERS CEDEX (FR)
(74) Mandataire: Lavoix

(56) Documents cités:
- US-A1- 2006 176 829
- US-A1- 2015 262 477
- US-A1- 2018 302 797
- PAPADOPOULOS GEORGIOS Z ET AL: "T-AAD: Lightweight traffic auto-adaptations for low-power MAC protocols", 2014 13TH ANNUAL MEDITERRANEAN AD HOC NETWORKING WORKSHOP (MED-HOC-NET), IEEE, 2 juin 2014 (2014-06-02), pages 79-86, XP032614132, DOI: 10.1109/MEDHOCNET.2014.6849108

## Description

La présente invention concerne un procédé d'optimisation d'un réseau de communication. La présente invention est aussi relative à un programme d'ordinateur et un support lisible d'informations propres à mettre en oeuvre le procédé d'optimisation.

Les documents US 2006/0176829 A1, US 2018/302797 A1 et US 2015/262477 A1 décrivent, chacun, un procédé d'évaluation d'une route de communication comprenant une pluralité de liaisons entre des noeuds dans un réseau ad hoc.

Dans le domaine des réseaux de communication, des équipements implémentant la norme LTE ont été commercialisés depuis 2010. Le sigle LTE renvoie à la dénomination anglaise de « Long Term Evolution » qui signifie littéralement « évolution à long terme ».

Dans le cadre de la norme LTE, il est recommandé l'utilisation d'une technologie SON (acronyme renvoyant à la dénomination anglaise de « Self Organizing Networks » signifiant littéralement auto-organisation de réseau). La technologie SON cherche à éviter les tâches fastidieuses de configuration manuelle de paramètres d'un réseau en permettant l'auto-configuration, l'auto-exploitation et l'auto-optimisation par les équipements eux-mêmes. Il en résulte que le réseau de communication LTE est optimisé, notamment en terme de trafic, par les équipements.

Toutefois, une telle optimisation n'est pas valable dans toutes les situations, notamment en présence d'aléas multiples, par exemple liés à la géographie du lieu au caractère nomadique des noeuds formant le réseau de et dans un contexte d'usage de plusieurs technologies de transmission présentant des complémentarités.

Il existe ainsi un besoin pour un procédé d'optimisation d'un réseau de communication permettant d'obtenir un réseau de communication de fonctionnement adapté pour un spectre plus large de situations.

A cet effet, l'invention a pour objet un procédé d'optimisation selon la revendication 1.

Suivant d'autres aspects avantageux de l'invention, le procédé d'optimisation est selon l'une quelconque des revendications 2 à 7.

L'invention a également pour objet un produit programme d'ordinateur selon la revendication 8.

L'invention a aussi pour objet un support lisible d'informations selon la revendication 9.

Des caractéristiques et avantages de l'invention apparaitront à la lecture de la description qui va suivre, donnée uniquement à titre d'exemple non limitatif, et faite en référence aux dessins annexés, sur lesquels :
- la figure 1 est une représentation schématique d'un système et d'un produit programme d'ordinateur dont l'interaction est propre à mettre en oeuvre un procédé d'optimisation d'un réseau de communication par sélection d'un ensemble de réseaux de communication candidats,
- la figure 2 est une vue schématique d'un exemple de réseau de communication candidat, et
- la figure 3 est un ordinogramme d'un exemple de mise en oeuvre d'un procédé d'optimisation par le système de la figure 1.

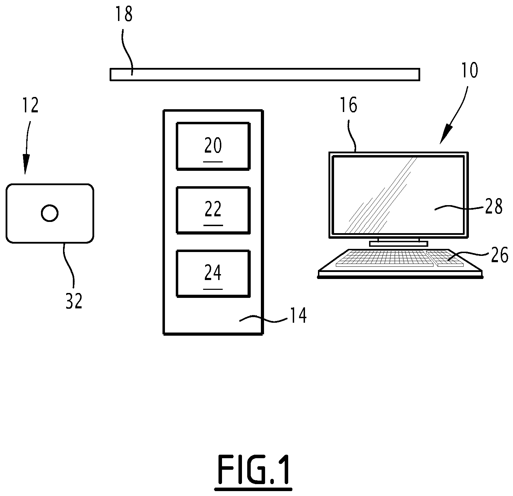

Un système 10 et un produit programme d'ordinateur 12 sont représentés sur la figure 1.

L'interaction entre le système 10 et le produit programme d'ordinateur 12 permet la mise en oeuvre d'un procédé d'optimisation d'un réseau de communication. Le procédé d'optimisation d'un réseau de communication est ainsi un procédé mis en oeuvre par ordinateur.

Le système 10 est un ordinateur de bureau. En variante, le système 10 est un ordinateur monté sur un rack, un ordinateur portable, une tablette, un assistant numérique personnel (PDA) ou un smartphone.

Dans des modes de réalisation spécifiques, l'ordinateur est adapté pour fonctionner en temps réel et/ou est dans un système embarqué, notamment dans un véhicule tel qu'un avion.

Dans le cas de la figure 1, le système 10 comprend un calculateur 14, une interface utilisateur 16 et un dispositif de communication 18.

Le calculateur 14 est un circuit électronique conçu pour manipuler et/ou transformer des données représentées par des quantités électroniques ou physiques dans des registres du système 10 et/ou des mémoires en d'autres données similaires correspondant à des données physiques dans les mémoires de registres ou d'autres types de dispositifs d'affichage, de dispositifs de transmission ou de dispositifs de mémorisation.

En tant qu'exemples spécifiques, le calculateur 14 comprend un processeur monocoeur ou multicoeurs (tel qu'une unité de traitement centrale (CPU), une unité de traitement graphique (GPU), un microcontrôleur et un processeur de signal numérique (DSP)), un circuit logique programmable (comme un circuit intégré spécifique à une application (ASIC), un réseau de portes programmables *in situ* (FPGA), un dispositif logique programmable (PLD) et des réseaux logiques programmables (PLA)), une machine à états, une porte logique et des composants matériels discrets.

Le calculateur 14 comprend une unité de traitement de données 20 adaptée pour traiter des données, notamment en effectuant des calculs, des mémoires 22 adaptées à stocker des données et un lecteur 24 adapté à lire un support lisible par ordinateur.

L'interface utilisateur 16 comprend un dispositif d'entrée 26 et un dispositif de sortie 28.

Le dispositif d'entrée 26 est un dispositif permettant à l'utilisateur du système 10 de saisir sur le système 10 des informations ou des commandes.

Sur la figure 1, le dispositif d'entrée 26 est un clavier. En variante, le dispositif d'entrée 26 est un périphérique de pointage (tel qu'une souris, un pavé tactile et une tablette graphique), un dispositif de reconnaissance vocale, un oculomètre ou un dispositif haptique (analyse de mouvements).

Le dispositif de sortie 28 est une interface utilisateur graphique, c'est-à-dire une unité d'affichage conçue pour fournir des informations à l'utilisateur du système 10.

Sur la figure 1, le dispositif de sortie 28 est un écran d'affichage permettant une présentation visuelle de la sortie. Dans d'autres modes de réalisation, le dispositif de sortie est une imprimante, une unité d'affichage augmenté et/ou virtuel, un haut-parleur ou un autre dispositif générateur de son pour présenter la sortie sous forme sonore, une unité produisant des vibrations et/ou des odeurs ou une unité adaptée à produire un signal électrique.

Dans un mode de réalisation spécifique, le dispositif d'entrée 26 et le dispositif de sortie 28 sont le même composant formant des interfaces homme-machine, tel qu'un écran interactif.

Le dispositif de communication 18 permet une communication unidirectionnelle ou bidirectionnelle entre les composants du système 10. Par exemple, le dispositif de communication 28 est un système de communication par bus ou une interface d'entrée / sortie.

La présence du dispositif de communication 18 permet que, dans certains modes de réalisation, les composants du calculateur 14 soient distants les uns des autres.

Le produit programme informatique 12 comprend un support lisible par ordinateur 32.

Le support lisible par ordinateur 32 est un dispositif tangible lisible par le lecteur 24 de la calculatrice 14.

Notamment, le support lisible par ordinateur 32 n'est pas un signal transitoire en soi, tels que des ondes radio ou d'autres ondes électromagnétiques à propagation libre, telles que des impulsions lumineuses ou des signaux électroniques.

Un tel support de stockage lisible par ordinateur 32 est, par exemple, un dispositif de stockage électronique, un dispositif de stockage magnétique, un dispositif de stockage optique, un dispositif de stockage électromagnétique, un dispositif de stockage à semi-conducteur ou toute combinaison de ceux-ci.

En tant que liste non exhaustive d'exemples plus spécifiques, le support de stockage lisible par ordinateur 32 est un dispositif codé mécaniquement, tel que des cartes perforées ou des structures en relief dans une gorge, une disquette, un disque dur, une mémoire morte (ROM), une mémoire vive (RAM), une mémoire effaçable programmable en lecture seule (EROM), une mémoire effaçable électriquement et lisible (EEPROM), un disque magnéto-optique, une mémoire vive statique (SRAM), un disque compact (CD-ROM), un disque numérique polyvalent (DVD), une clé USB, un disque souple, une mémoire flash, un disque à semi-conducteur (SSD) ou une carte PC telle qu'une carte mémoire PCMCIA.

Un programme d'ordinateur est stocké sur le support de stockage lisible par ordinateur 32. Le programme d'ordinateur comprend une ou plusieurs séquences d'instructions de programme mémorisées.

De telles instructions de programme, lorsqu'elles sont exécutées par l'unité de traitement de données 20, entraînent l'exécution d'étapes du procédé d'optimisation.

Par exemple, la forme des instructions de programme est une forme de code source, une forme exécutable par ordinateur ou toute forme intermédiaire entre un code source et une forme exécutable par ordinateur, telle que la forme résultant de la conversion du code source via un interpréteur, un assembleur, un compilateur, un éditeur de liens ou un localisateur. En variante, les instructions de programme sont un microcode, des instructions firmware, des données de définition d'état, des données de configuration pour circuit intégré (par exemple du VHDL) ou un code objet.

Les instructions de programme sont écrites dans n'importe quelle combinaison d'un ou de plusieurs langages, par exemple un langage de programmation orienté objet (FORTRAN, C++, JAVA, HTML), un langage de programmation procédural (langage C par exemple).

Alternativement, les instructions du programme sont téléchargées depuis une source externe via un réseau, comme c'est notamment le cas pour les applications. Dans ce cas, le produit programme d'ordinateur comprend un support de données lisible par ordinateur sur lequel sont stockées les instructions de programme ou un signal de support de données sur lequel sont codées les instructions de programme.

Dans chaque cas, le produit programme d'ordinateur 12 comprend des instructions qui peuvent être chargées dans l'unité de traitement de données 20 et adaptées pour provoquer l'exécution du procédé d'optimisation lorsqu'elles sont exécutées par l'unité de traitement de données 20. Selon les modes de réalisation, l'exécution est entièrement ou partiellement réalisée soit sur le système 10, c'est-à-dire un ordinateur unique, soit dans un système distribué entre plusieurs ordinateurs (notamment via l'utilisation de l'informatique en nuage).

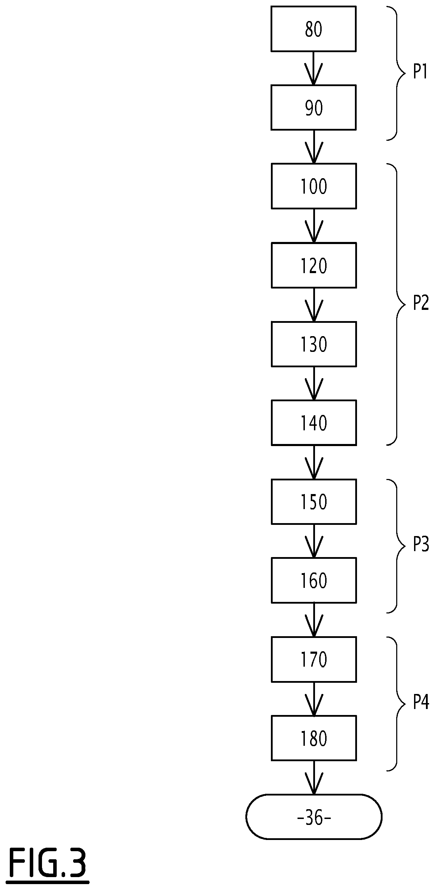

Le fonctionnement du système 10 est maintenant décrit en référence à la figure 3 qui est un ordinogramme d'un exemple de mise en oeuvre d'un procédé d'optimisation d'un réseau de communication.

Le procédé d'optimisation vise à optimiser un réseau de communication pour obtenir un réseau de communication optimisé. Le réseau de communication optimisé est le résultat du procédé d'optimisation comme indiqué par la référence 36 dans la figure 3 de sorte que le réseau de communication optimisé est réseau optimisé 36 dans ce qui suit.

Une telle optimisation est effectuée sous plusieurs contraintes, ces contraintes correspondant généralement à des aléas causés par l'environnement et à des impératifs de communication.

Le procédé d'optimisation comporte une phase d'obtention P1, une phase d'évaluation P2, une phase de sélection P3 et une phase d'utilisation P4.

La phase d'obtention P1 comporte une étape d'obtention 80 et une étape de fourniture 90.

Lors de l'étape d'obtention 80 de la phase d'obtention P1, il est obtenu un ensemble de réseaux candidats 40.

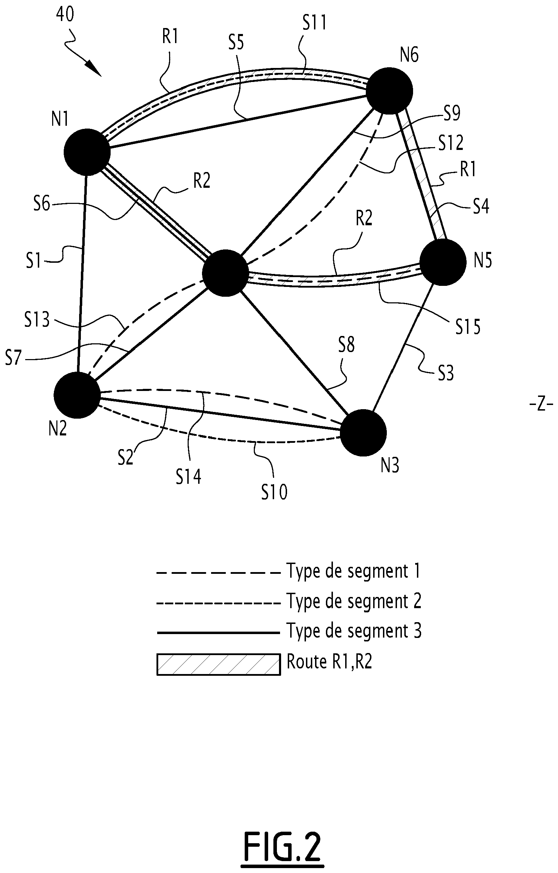

Un exemple de réseau de communication 40 candidat, dit réseau candidat 40 dans la suite, est visible sur la figure 2.

Le réseau candidat 40 est, par exemple, un réseau ad hoc.

Comme visible sur la figure 2, le réseau candidat 40 comprend une pluralité de noeuds N de communication, par exemple six noeuds. Dans la suite de la description, un élément Xi (ici un noeud) est désigné comme élément Xi (ici Ni) au lieu du i^{ème} élément Xi.

Comme visible sur la figure 2, le réseau candidat 40 comprend une pluralité de segments S de transmission, par exemple quinze segments S1, ... S15 reliant les noeuds N. Dans ce qui suit, le segment S de transmission est appelé « segment ».

Comme visible sur la figure 2, les noeuds N sont présents dans une zone géographique Z. Chaque noeud N est notamment mobile par rapport à la zone géographique Z. Chaque noeud N présente une position géographique comprise dans la zone géographique Z.

Chaque noeud N est repéré par un identifiant, tel qu'une adresse selon le protocole internet, aussi désigné par l'abréviation IP renvoyant au terme anglais d'« Internet Protocol ».

Dans la figure 2, chaque noeud N comprend un dispositif de communication, non représenté, adapté à mettre en oeuvre une ou plusieurs communications avec un ou plusieurs autres noeuds N du réseau candidat 40, par l'utilisation des segments S reliant les noeuds N.

Par « communication », il est entendu un échange de données, par exemple des paquets de données, entre deux noeuds N du réseau candidat 40.

Chaque segment S est un lien de communication reliant deux noeuds N. Chaque segment S est propre à être utilisé par un protocole et pour fournir une capacité de transmission de données. Notamment, chaque segment S est caractérisé par le protocole et la capacité de transmission de données. Chaque segment S est ainsi notamment adapté à transmettre une pluralité de communications, telles que des paquets de données ou des flux de données, entre deux noeuds N à travers le réseau candidat 40.

Le protocole définit notamment un type de données échangées par le segment N, et/ou les dispositifs aptes à mettre en oeuvre le segment N.

Le protocole est, par exemple, un type de technologie de transmission.

Des exemples de types de technologie de transmission sont donnés ci-après.

Le protocole est ainsi, par exemple, choisi dans la liste consistant en : un protocole de transmission par satellite, un protocole de liaison de téléphonie mobile, un protocole de liaison de faisceau hertzien et un protocole de liaison câblée.

Le protocole de transmission par satellite utilise, par exemple, une liaison entre deux noeuds N de communication par l'intermédiaire d'au moins un satellite, par exemple un satellite de type Satcom.

Le protocole de liaison de téléphonie mobile est, par exemple, un protocole défini par le 3GPP (de l'anglais « 3rd Génération Partnership Project » pour Projet de partenariat de 3ème génération), tel que le GPRS (de l'anglais « General Packet Radio Service » pour Service général de radio par paquets), l'EDGE (de l'anglais « Enhanced Data Rates for GSM Evolution » pour Débits de données améliorés pour l'évolution du GSM), l'UMTS (de l'anglais « Universal Mobile Télécommunications System » pour Système universel de télécommunications mobiles) ou le LTE.

Le réseau candidat 40 est adapté à utiliser au moins deux protocoles distincts.

Par l'expression « au moins deux protocoles distincts étant utilisés par le réseau de communication », il est entendu que le réseau candidat 40 comprend au moins deux segments S distincts configurés pour utiliser des protocoles distincts l'un par rapport à l'autre. Le réseau candidat 40 est, par exemple, configuré pour utiliser un premier type de protocole et un deuxième type de protocole différent du premier type.

Par « type de protocole », il est entendu un protocole particulier à un support de transmission apte à traiter et transmettre un type spécifique de données et un type spécifique de communication, répondant à au moins une exigence choisie dans la liste constitué d'une exigence de débit minimum d'une exigence de débit moyen, d'une exigence de latence spécifique, d'une exigence de gigue spécifique et d'une exigence de taux de perte de paquets.

Dans l'exemple de la figure 1, les segments S1 à S9 sont des segments mis en oeuvre par le protocole de liaison de faisceau hertzien, appelés type de segment 1. Par exemple, les segments S10 et S11 sont mis en oeuvre par le protocole de transmission par satellite, appelés type de segment 2. Les segments S12, S13 et S14 sont mis en oeuvre par le protocole de liaison de téléphonie mobile, appelés type de segment 3.

Chaque segment S est spécifique aux noeuds N reliés par ledit segment S. Par exemple, un premier noeud N est propre à transmettre des communications à un deuxième noeud N par un segment S propre à être utilisé par un premier protocole. Le premier noeud N est en outre notamment propre à transmettre des communications à un troisième noeud N, distinct du deuxième noeud N, par un segment S propre à être utilisé par un deuxième protocole.

Dans l'exemple de la figure 1, les noeuds N suivants sont reliés par des segments présentant le protocole de liaison de téléphonie mobile : les noeuds N2 et N4, les noeuds N4 et N6, les noeuds N4 et N5, ainsi que les noeuds N2 et N3.

Dans l'exemple, les noeuds suivants sont reliés par des segments présentant le protocole de transmission par satellite : les noeuds N2 et N3, ainsi que les noeuds N1 et N6.

Dans l'exemple, les noeuds suivants sont reliés par des segments présentant le protocole de liaison de faisceau hertzien : le noeud N4 avec chacun des noeuds N1, N2, N3, N5 et N6, le noeud N1 avec chacun des noeuds N2 et N6, le noeud N3 avec chacun des noeuds N2 et N5, ainsi que les noeuds N5 et N6.

Notamment, certains noeuds du réseau candidat 40 sont reliés entre eux par plusieurs segments présentant des protocoles distincts. Par exemple, les noeuds N2 et N3 sont reliés entre eux par trois segments entre eux, à savoir un segment S10 mis en oeuvre par le protocole de transmission par satellite, un segment S14 mis en oeuvre par le protocole de liaison de téléphonie mobile, et un segment S2 mis en oeuvre par le protocole de liaison de faisceau hertzien.

Notamment, chaque segment S présente une liaison bidirectionnelle. En variante, au moins un segment S présente une liaison unidirectionnelle.

Plusieurs segments S forment une route de communication, appelée route R1, R2 dans ce qui suit. En variante, la route R1, R2 comprend un seul segment S.

Le réseau candidat 40 est configuré pour mettre en oeuvre des communications entre les noeuds N via les routes R1, R2. Notamment, lorsque deux noeuds N susceptibles à établir une communication ne sont pas reliés directement par un segment S, le réseau de communication 40 est configuré pour transmettre la communication par la route R1, R2.

Dans l'exemple de la figure 2, une communication entre le noeud N1 et N5 est, par exemple, alternativement mise en oeuvre par la route R1 reliant ces noeuds via le noeud N6 ou par la route R2 reliant les noeuds N1 et N5 via le noeud N4. La route R1 comprend le segment S11 et le segment S4. La route R2 comprend le segment S6 et le segment S15.

Selon un premier exemple, chaque réseau candidat 40 est fourni directement au système 10.

Selon un deuxième exemple, chaque réseau candidat 40 est déterminé par le système 10 en fonction de contraintes extérieures.

Par exemple, le système 10 détermine un réseau candidat 40 à partir de la géographie du lieu où le réseau optimisé 36 sera installé.

En variante ou en complément, d'autres paramètres sont pris en compte comme la typologie des stations du réseau, la présence de perturbations (interférence), le fonctionnement de la station (risque de panne, ancienneté de la station, technologie de la station ou autres) ou la portée de la station.

Il est ainsi obtenu à un ensemble de réseaux candidats 40 à évaluer, l'évaluation devant permettre de déterminer le réseau optimisé 36.

Le réseau optimisé 36 est un réseau candidat 40 propre à satisfaire un certain nombre de besoins qui sont fournis dans l'étape qui suit.

Lors de l'étape de fourniture 90 de la phase d'obtention P1, le système 10 reçoit au moins un besoin de transmission entre deux noeuds N1 à N6 du réseau optimisé 36, le besoin de transmission comprenant au moins un besoin d'un débit minimal et/ou un besoin d'une latence maximale,

Par « débit », il est entendu le nombre de bits transmises par seconde.

Par « débit minimal/maximal », il est entendu le nombre de bits minimal/maximal transmises par seconde.

Par « latence », il est entendu la durée entre l'instant d'émission et l'instant de réception d'une communication transmise entre deux noeuds N du réseau de communication 40.

En complément, le besoin de transmission comporte également une exigence de gigue maximale ainsi qu'une exigence de taux de perte de paquets maximum sur un segment donné.

Par « gigue », il est entendu la variation maximum de la latence entre l'instant d'émission et l'instant de réception d'une communication transmise entre deux noeuds N du réseau de communication 40.

Par « taux de perte de paquets », il est entendu le nombre de paquet non correctement transmis sur un segment pour 100 paquets transmis.

D'autres besoins sont fournis avec le besoin de transmission. Par exemple, le besoin de transmission comprend, en outre, un horaire et/ou une durée de communication requise.

Lors de la phase d'évaluation P2, il est évalué pour chaque réseau candidat 40 si chaque besoin de transmission fourni est respecté.

La phase d'évaluation P2 comporte ainsi, pour chaque réseau candidat 40 et chaque besoin de transmission, une étape d'obtention 100, une étape de calcul 120, une étape de détermination 130 et une étape d'évaluation 140.

Un exemple de phase d'évaluation P2 est maintenant décrit pour le réseau candidat 40 de la figure 2 et pour un besoin de transmission entre le noeud N1 et le noeud N6 du réseau candidat 40. Le besoin de transmission est caractérisé par un débit minimal et/ou une latence maximale.

Lors de l'étape d'obtention 110, le système 10 obtient les paramètres relatifs à chaque segment S.

Les paramètres comprennent une probabilité de dégradation de la capacité de transmission.

La capacité de transmission comprend, par exemple, le débit maximal et/ou minimal du segment S, la latence du segment S et/ou la variance de débit ou latence pendant une période de référence.

Le débit maximal et/ou minimal est, par exemple, exprimé en bits par seconde susceptibles à être transmises par le segment S.

La dégradation de la capacité de transmission est notamment une dégradation du débit, tel que du débit maximal ou minimal du segment, et/ou une dégradation de la fiabilité de transmission. Par « fiabilité de transmission », il est entendu la probabilité qu'un paquet de données de la communication soit transmis sans être perdu.

Le système 10 calcule, par exemple, la probabilité de dégradation en fonction d'une caractéristique environnementale. Selon un autre exemple, le système 10 reçoit la probabilité de dégradation, par exemple d'une base de données, non représentée.

La caractéristique environnementale comprend, par exemple, une position géographique de chaque noeud N, une probabilité d'interférence, une espérance de vie de chaque noeud N et une probabilité qu'une destruction de chaque noeud N intervienne compte tenu, en particulier, de sa position géographique.

La probabilité d'interférence pour un noeud N est une loi de probabilité qui prend en compte la position géographique estimée d'un émetteur interférant sa distance au noeud N, la puissance du noeud N et la bande spectrale sur laquelle l'émetteur est susceptible d'agir et qui en sortie indique une probabilité d'occurrence ainsi qu'un pourcentage d'impact sur tout système de transmission présent dans cette même bande spectrale.

L'espérance de vie de chaque noeud N est, par exemple, une espérance de vie moyenne, telle qu'une moyenne arithmétique. L'espérance de vie est, par exemple, enregistrée dans une base de données d'espérance de vie, non représentée. Le système 10 interroge, par exemple, la base de données d'espérance de vie pour obtenir l'espérance de vie de chaque noeud N, et calcule une espérance de vie restante pour chaque noeud N.

Par « probabilité de destruction » d'un noeud N, il est entendu que le noeud N est incapable de transmettre des communications suite à une destruction du noeud N, par exemple par une partie adverse et/ou par un défaut électrique du noeud N. Par exemple, le système 10 reçoit la probabilité de destruction de chaque noeud N par un opérateur ou par fourniture d'une loi de probabilité prenant en compte la position géographique du noeud N

Pour calculer la probabilité de dégradation en fonction de la caractéristique environnementale, le système 10 reçoit la caractéristique environnementale ou d'une base de données, non représentée.

A titre d'exemple, le système 10 augmente la probabilité de dégradation d'un segment S lorsque les positions géographiques des noeuds N reliés par ledit segment S sont espacées d'une distance supérieure à une portée prédéterminée dudit segment S, lorsque l'espérance de vie restante d'un des noeuds N reliés par le segment S est inférieure à un seuil et/ou lorsque la probabilité de destruction d'un des noeuds N reliés par le segment S est supérieure à un seuil. Par exemple, le système 10 augmente la probabilité de dégradation selon une première fonction prédéterminée. La caractéristique environnementale est notamment un argument de fonction de la première fonction prédéterminée.

Les paramètres comprennent, en outre, un paramètre de trafic.

Le paramètre de trafic est un paramètre relatif à un débit de transmission alloué audit segment S.

Par « débit de transmission alloué », il est entendu qu'au moins une partie de la capacité de transmission est réservée sur un segment spécifique.

En particulier, le débit de transmission alloué est le débit binaire réservé à un trafic correspondant de la capacité de transmission. Par exemple, un type de trafic prédéfini est susceptible d'être transmis par le débit de transmission alloué.

Par exemple, le débit de transmission alloué est un débit de transmission prédéfini ou un débit de transmission nominal.

Par exemple, le débit de transmission alloué est au moins une fraction de la capacité de transmission.

La capacité de transmission comprend, par exemple, le débit maximal et/ou minimal du segment S.

En variante ou en complément, la capacité de transmission comprend la latence du segment S et/ou la variance de débit ou latence pendant une période de référence.

Selon l'exemple décrit, le débit de transmission est ainsi un débit maximal ou minimal du segment S pour un type de trafic prédéfini.

Par exemple, le système 10 additionne, pour chaque segment S, des débits de transmission alloués pour l'ensemble des communications pour chaque instant d'une période de contrôle sur le segment S respectif.

Par exemple, chaque communication transmet une donnée comprenant, pour chaque instant de la période de contrôle, la probabilité de mise en oeuvre de cette communication par le segment S respectif. Une loi de probabilité représentative des communications d'un réseau déployable indique la probabilité d'une simultanéité de communications pendant ladite période de contrôle.

Les routes suivies par les différentes communications empruntent ainsi, par exemple, simultanément le segment S et transmet la probabilité au système 10. Le système 10 obtient ainsi le paramètre de trafic notamment en fonction de la ou les lois de probabilité d'une simultanéité d'une pluralité de transmissions sur le segment S.

Lors de l'étape de calcul 120, le système 10 calcule, pour chaque segment S, la probabilité de congestion du segment S en fonction de la capacité de transmission du segment S et des paramètres obtenus.

Selon un exemple, la probabilité de congestion dépend également de la ou des lois de probabilité d'une simultanéité d'une pluralité de transmissions sur le segment S.

Notamment, le système 10 calcule la probabilité de congestion du segment S selon une deuxième fonction prédéterminée. La capacité de transmission et les paramètres obtenus sont en particulier des variables de la deuxième fonction prédéterminée.

Par exemple, le système 10 augmente la probabilité de congestion si la capacité de transmission diminue, tout en observant un paramètre de trafic constant. Selon un exemple, le système 10 augmente la probabilité de congestion si le paramètre de trafic augmente, si la capacité de transmission est constante.

Lors de l'étape de détermination 130, le système 10 détermine la route R1, R2 pour établir une communication entre les deux noeuds N en fonction des probabilités de congestion des segments S et en fonction du besoin transmission. Le système 10 obtient ainsi une route déterminée.

Par exemple, le système 10 détermine la route R1, R2 déterminée selon une troisième fonction prédéterminée. Les probabilités de congestion des segments S et le besoin transmission sont des variables de la troisième fonction prédéterminée.

Par exemple, le système 10 détermine, pour chaque route R1, R2 reliant les deux noeuds N, la probabilité de congestion de route, qui est la probabilité de congestion la plus élevée des segments S de la route R1, R2.

En référence à l'exemple de la figure 2, le segment S6 reliant les noeuds N1 et N4 présente par exemple une probabilité de congestion de 40%, et le segment S15 reliant les noeuds N4 et N5 une probabilité de congestion de 35%. La probabilité de congestion de route de la route R2 reliant les noeuds N1, N4 et N5 est ainsi égale à 40%. Le segment S11 reliant les noeuds N1 et N6 présente par exemple une probabilité de congestion de 20%, et le segment S4 reliant les noeuds N6 et N5 une probabilité de congestion de 50%. La probabilité de congestion de route de la route R1 reliant les noeuds N1, N6 et N5 est ainsi égale à 50%. Selon l'exemple, le système 10 détermine la route R2 comme étant la route déterminée.

Selon un exemple, la route R2 présente une capacité de transmission égale à 250 Mbit/s, par exemple limité par le segment 15 qui met en oeuvre un protocole de liaison de téléphonie mobile. La route R1 présente une capacité de transmission égale à 1 Gbit/s, et le besoin de transmission comprend un débit minimal requis de 800 Mbit/s. Selon cet exemple, le système 10 détermine la route R1 comme la route déterminée.

Selon un exemple, le système 10 compare la probabilité de congestion de route à un seuil de probabilité. Le système 10 sélectionne par exemple la route R1, R2 comme route candidate lorsque la probabilité de congestion de route est inférieure au seuil de probabilité. Le système 10 choisit notamment la route R1, R2 déterminée parmi la ou les routes candidates.

Cela permet par exemple d'écarter des routes R1, R2 par le système 10 d'un traitement, et ainsi de réduire la capacité de calcul requise par le système 10.

Lors de l'étape d'évaluation 140, le système 10 évalue le respect du besoin de transmission par le réseau candidat 40 en fonction de la route déterminée à l'étape de détermination 130.

Une telle évaluation est faite par le système 10 pour obtenir un score d'évaluation.

Selon une variante simple, le score d'évaluation est binaire, à savoir que le score d'évaluation est égal à une première valeur correspondant au fait que le besoin n'est pas respecté et est égal à une deuxième valeur correspondant au fait que le besoin est respecté.

Selon une variante plus élaborée, le score d'évaluation prend aussi en compte la probabilité de congestion.

Selon un autre mode de réalisation ou en complément, le système 10 évalue un score global pour le réseau candidat 40 en agrégeant à partir de chaque score d'évaluation obtenu pour chaque besoin.

L'agrégation est, selon un mode de réalisation, pondérée par l'importance du respect du besoin dont le respect est évalué par le score d'évaluation.

Lors de la phase de sélection P3, il est sélectionné le réseau optimisé 36 parmi l'ensemble des réseaux candidats 40 à l'aide des scores d'évaluation (ou du score global).

Plus précisément, selon l'exemple proposé, la phase de sélection P3 comporte une étape d'affichage 150 et une étape de sélection 160.

Lors de l'étape d'affichage 150, il est affiché à un opérateur pour chaque réseau candidat 40 le score d'évaluation, par exemple à l'aide du dispositif de sortie 28.

D'autres éléments peuvent être affichés comme le segment congestionné.

L'étape de sélection 160 consiste à sélectionner le réseau candidat 40 qui deviendra le réseau optimisé 36.

Bien qu'il soit envisageable de mettre en oeuvre l'étape de sélection 160 par le système 10, il est décrit dans ce qui suit une mise en oeuvre de l'étape de sélection 160 par l'opérateur. Dans un tel contexte, les phases précédentes correspondent à une aide à la décision de l'opérateur.

Dans un exemple simple, l'opérateur choisit comme réseau optimisé 36 le réseau candidat 40 ayant le score d'évaluation le plus élevé.

Dans un exemple plus réaliste, l'opérateur prend en compte plusieurs éléments et aucun des réseaux candidats 40 ne respecte l'ensemble des besoins de sorte que l'opérateur est amené à faire des compromis.

Pour cela, selon un exemple, le système 10 détermine un indicateur de résilience du réseau candidat 40 en fonction de la probabilité de congestion et de la caractéristique environnementale.

L'indicateur de résilience est, par exemple, une probabilité. L'indicateur de résilience est notamment une unique valeur de probabilité.

L'indicateur de résilience caractérise notamment la résilience du réseau candidat 40 pour une route R1, R2 choisie comme route R1, R2 déterminée.

Par exemple, le système 10 détermine l'indicateur de résilience pour chaque route R1, R2 possible. Selon un exemple, le système 10 hiérarchise chaque route R1, R2 en fonction de la probabilité de congestion de route de ladite route R1, R2.

Par exemple, le système 10 détermine l'indicateur de résilience selon une quatrième fonction prédéterminée. La probabilité de congestion et de la caractéristique environnementale, sont des variables de la quatrième fonction prédéterminée. Par exemple, une moyenne, telle qu'une moyenne arithmétique, de la probabilité de congestion est une variable de la quatrième fonction prédéterminée.

Selon un exemple, et en référence à la figure 2, la moyenne de probabilité de congestion de la route R2 est par exemple 40%, pour le segment S6, plus 35%, pour le segment S15, divisé par deux, et est ainsi égale à 37,5%. La moyenne de probabilité de congestion de la route R1 est par exemple 20%, pour le segment S11, plus 50%, pour le segment S4, divisé par deux, et est ainsi égale à 35%.

Si les autres probabilités de congestion sont constantes, selon l'exemple, l'indicateur de résilience est plus élevé lorsque le système 10 choisit la route R1, car la moyenne de congestion est plus faible, par rapport au cas où le système 10 choisit la route R2.

Dans un tel cas, l'opérateur prend en compte l'indicateur de résilience et les scores d'évaluation (éventuellement agrégé) pour déterminer le réseau optimisé 36.

A l'issue de la phase de sélection P3, il est obtenu un réseau optimisé 36.

La phase d'utilisation P4 comporte deux étapes : une étape d'implémentation 170 et une étape d'exploitation 180.

Lors de la phase d'implémentation 170, il est implémenté le réseau optimisé 36 qui a été choisi par l'opérateur.

Cela signifie que, sur la zone géographique Z, les segments et les noeuds sont positionnés comme sur la figure 2 (en supposant que le réseau candidat 40 de la figure 2 est le réseau sélectionné).

Le réseau ainsi implémenté est ensuite utilisé lors de l'étape d'exploitation 180.

En particulier, lors de l'émission d'une requête de communication par un noeud à destination d'un autre, la route choisie est la route déterminée à l'étape de détermination 130.

Cela permet d'obtenir en fonctionnement un réseau de communication dans lequel la fiabilité de transmission de messages à travers le réseau de communication est amélioré.

Le procédé d'optimisation permet ainsi d'obtenir un réseau optimisé 36.

Notamment, en déterminant le segment S à utiliser en fonction des probabilités de congestion des segments S et en fonction du besoin transmission, la probabilité de congestion d'un ou plusieurs segments S est réduite.

Aussi, le procédé d'optimisation permet de prendre en compte le fait que plusieurs segments S utilisent des protocoles distincts. Notamment, la capacité de transmission de plusieurs segments S utilisant des protocoles distincts est prise en compte par le procédé d'optimisation.

En particulier, le procédé d'optimisation décrit permet d'obtenir une topologie optimale en termes fiabilité de transmission des messages, notamment grâce à la prise en compte du paramètre de dégradation et du paramètre de trafic pour tenir compte des aléas opérationnels du réseau de communication 40.

Autrement formulé, le procédé d'optimisation décrit permet d'obtenir un réseau de communication de fonctionnement adapté pour un spectre plus large de situations puisque les cas avec plusieurs protocoles de communication sont gérés.

En variante, lors de l'étape de détermination 130, les probabilités de congestion des segments S ne sont pas prises en compte. L'étape de détermination 130 comprend alors la détermination de la route déterminée en fonction du besoin de transmission, notamment uniquement en fonction dudit besoin de transmission.

En variante non représentée, et/ou en complément, l'étape de calcul 120 est mise en oeuvre après l'étape de détermination 130.

Selon un exemple, l'étape d'évaluation 140 comprend l'évaluation du respect du besoin de transmission par le réseau de communication candidat 40 en fonction des probabilités de congestion des segments S de la route déterminée, pour obtenir un score d'évaluation.

L'homme du métier comprendra que les modes de réalisation décrits précédemment sont susceptibles d'être combinés entre eux lorsqu'une telle combinaison est possible techniquement.

## Revendications

1. Procédé d'optimisation d'un réseau de communication (40) pour obtenir un réseau de communication optimisé (36), le procédé étant mis en oeuvre par ordinateur, le procédé comportant :
- une phase d'obtention, la phase d'obtention comportant une étape de :
- obtention d'un ensemble de réseaux de communication candidats (40), chaque réseau de communication candidat (40) comprenant une pluralité de noeuds (N1, ... N6) et une pluralité de segments (S1, ... S15) de transmission reliant les noeuds (N1, ... N6), chaque segment (S1, ... S15) étant propre à être utilisé par un protocole et pour fournir une capacité de transmission de données, au moins deux protocoles distincts étant utilisés par le réseau de communication candidat (40), et
- fourniture d'au moins un besoin de transmission entre deux noeuds (N1, ... N6) du réseau de communication optimisé (36), le besoin de transmission comprenant au moins un besoin parmi un besoin d'un débit minimal et un besoin d'une latence maximale ;
- une phase d'évaluation, la phase d'évaluation comportant, pour chaque besoin de transmission et pour chaque réseau de communication candidat (40), une étape de :
- obtention de paramètres relatifs à chaque segment (S1, ... S15), les paramètres comprenant une probabilité de dégradation de ladite capacité de transmission et un paramètre de trafic, le paramètre de trafic étant un paramètre relatif à des débits de transmission alloués audit segment (S1, ... S15),
- détermination d'une route (R1, R2) à utiliser pour établir une communication entre les deux noeuds (N1, ... N6) en fonction du besoin de transmission, la route (R1, R2) à utiliser comprenant au moins un segment (S1, ... S15) et étant dite route déterminée,
- calcul, pour chaque segment (S1, ... S15) de la route déterminée, d'une probabilité de congestion dudit segment (S1, ... S15) en fonction de la capacité de transmission dudit segment (S1, ... S15) et des paramètres obtenus,
- évaluation du respect du besoin de transmission par le réseau de communication candidat (40) en fonction des probabilités de congestion des segments (S1, ... S15) de la route déterminée, pour obtenir un score d'évaluation, et
- une phase de sélection d'un réseau de communication optimisé (36) parmi l'ensemble des réseaux de communication candidats (40) à l'aide des scores d'évaluation.

2. Procédé d'optimisation selon la revendication 1, dans lequel chaque segment (S1, ... S15) d'un réseau de communication candidat (40) est mis en oeuvre par un protocole choisi parmi un protocole de transmission par satellite, un protocole de liaison de téléphonie mobile, un protocole de liaison de faisceau hertzien et un protocole de liaison câblée.

3. Procédé d'optimisation selon la revendication 1 ou 2, dans lequel il est déterminé, pour chaque route (R1, R2) reliant les deux noeuds (N1, ... N6), une probabilité de congestion de route comme étant la probabilité de congestion la plus élevée des segments (S1, ... S15) de ladite route (R1, R2), la route (R1, R2) à utiliser étant choisie en fonction de chaque probabilité de congestion de route.

4. Procédé d'optimisation selon la revendication 3, dans lequel ladite probabilité de congestion de route est comparée à un seuil de probabilité, la route (R1, R2) étant sélectionnée comme route candidate lorsque ladite probabilité de congestion de route est inférieure au seuil de probabilité, et la route (R1, R2) à utiliser étant choisie parmi la ou les routes candidates.

5. Procédé d'optimisation selon la revendication 3 ou 4, dans lequel, lors de l'étape d'obtention de la phase d'évaluation, le paramètre de trafic est obtenu en fonction d'une loi de probabilité d'une simultanéité d'une pluralité de transmissions sur le segment (S1, ... S15), et dans lequel, lors de l'étape de détermination, la route (R1, R2) à utiliser est déterminée en fonction des probabilités de congestion dépendant de ladite loi de simultanéité.

6. Procédé d'optimisation selon l'une quelconque des revendications 1 à 5, dans lequel le procédé comprend, en outre, une étape de fourniture d'une caractéristique environnementale, la caractéristique environnementale étant au moins une caractéristique choisie dans la liste constituée de : une position géographique de chaque noeud (N1, ... N6), une probabilité d'interférence, une espérance de vie de chaque noeud (N1, ... N6) et une probabilité de destruction de chaque noeud (N1, ... N6).

7. Procédé d'optimisation selon la revendication 6, dans lequel la phase d'évaluation comprend le calcul d'un indicateur de résilience du réseau de communication candidat (40) en fonction de la probabilité de congestion et de la caractéristique environnementale, la phase de sélection du réseau de communication optimisé (36) prenant également en compte l'indicateur de résilience calculé.

8. Produit programme d'ordinateur comportant des instructions logicielles qui, lorsqu'elles sont exécutées par un ordinateur, mettent en oeuvre un procédé selon l'une quelconque des revendications 1 à 7.

9. Support lisible d'informations comportant des instructions de programme formant un programme d'ordinateur, le programme d'ordinateur étant chargeable sur une unité de traitement de données et adapté pour entraîner la mise en oeuvre d'au moins une étape d'un procédé selon l'une quelconque des revendications 1 à 7 lorsque le programme d'ordinateur est mis en oeuvre sur l'unité de traitement de données.

## Patentansprüche

1. Verfahren zum Optimieren eines Kommunikationsnetzes (40), um ein optimiertes Kommunikationsnetz (36) zu erlangen, wobei das Verfahren computerimplementiert ist, das Verfahren umfassend:
- eine Erlangungsphase, die Erlangungsphase umfassend einen folgenden Schritt:
- Erlangen eines Satzes von Kandidaten-Kommunikationsnetzen (40), jedes Kandidaten-Kommunikationsnetz (40) umfassend eine Vielzahl von Knoten (N1, ... N6) und eine Vielzahl von Übertragungssegmenten (S1, ... S15), die die Knoten (N1, ... N6) verbinden, wobei jedes Segment (S1, ... S15) geeignet ist, um von einem Protokoll verwendet zu werden und eine Datenübertragungskapazität bereitzustellen, wobei mindestens zwei verschiedene Protokolle von dem Kandidaten-Kommunikationsnetz (40) verwendet werden, und
- Bereitstellen von mindestens einem Übertragungsbedarf zwischen zwei Knoten (N1, ... N6) des optimierten Kommunikationsnetzes (36), der Übertragungsbedarf umfassend mindestens einen Bedarf nach einer minimalen Rate und einen Bedarf nach einer maximalen Latenz;
- eine Auswertungsphase, die Auswertungsphase für jeden Übertragungsbedarf und für jedes Kandidaten-Kommunikationsnetz (40) umfassend einen folgenden Schritt:
- Erlangen von Parametern, die sich auf jedes Segment (S1, ... S15) beziehen, die Parameter umfassend eine Wahrscheinlichkeit einer Verschlechterung der Übertragungskapazität und einen Verkehrsparameter, wobei der Verkehrsparameter ein Parameter ist, der sich auf Übertragungsraten bezieht, die dem Segment (S1, ... S15) zugewiesen sind,
- Bestimmen einer Route (R1, R2), die verwendet werden soll, um eine Kommunikation zwischen den zwei Knoten (N1, ... N6) abhängig von dem Übertragungsbedarf herzustellen, die zu verwendende Route (R1, R2) umfassend mindestens ein Segment (S1, ... S15) und als bestimmte Route bezeichnet wird,
- Berechnen, für jedes Segment (S1,... S15) der bestimmten Route, einer Wahrscheinlichkeit einer Überlastung des Segments (S1,... S15) abhängig von der Übertragungskapazität des Segments (S1, ... S15) und den erlangten Parametern,
- Bewerten der Einhaltung des Übertragungsbedarfs durch das Kandidaten-Kommunikationsnetz (40) abhängig von den Wahrscheinlichkeiten von Überlastungen der Segmente (S1, ... S15) der bestimmten Route, um eine Bewertungspunktzahl zu erlangen, und
- eine Auswahlphase eines optimierten Kommunikationsnetzes (36) aus allen Kandidaten-Kommunikationsnetzen (40) mittels der Bewertungspunktzahlen.

2. Optimierungsverfahren nach Anspruch 1, wobei jedes Segment (S1, ... S15) eines Kandidaten-Kommunikationsnetzes (40) durch ein Protokoll implementiert wird, das ausgewählt ist aus einem Satellitenübertragungsprotokoll, einem Mobilfunkverbindungsprotokoll, einem Richtfunkverbindungsprotokoll und einem Kabelverbindungsprotokoll.

3. Optimierungsverfahren nach Anspruch 1 oder 2, wobei für jede Route (R1, R2), die die zwei Knoten (N1, ... N6) verbindet, eine Routenüberlastungswahrscheinlichkeit als die höchste Überlastungswahrscheinlichkeit der Segmente (S1, ... S15) der Route (R1, R2) bestimmt wird, wobei die zu verwendende Route (R1, R2) abhängig von jeder Routenüberlastungswahrscheinlichkeit ausgewählt ist.

4. Optimierungsverfahren nach Anspruch 3, wobei die Routenüberlastungswahrscheinlichkeit mit einem Wahrscheinlichkeitsschwellenwert verglichen wird, wobei die Route (R1, R2) als Kandidatenroute ausgewählt wird, wenn die Routenüberlastungswahrscheinlichkeit kleiner als der Wahrscheinlichkeitsschwellenwert ist, und die zu verwendende Route (R1, R2) ausgewählt ist aus der oder den Kandidatenrouten.

5. Optimierungsverfahren nach Anspruch 3 oder 4, wobei bei dem Schritt eines Erlangens der Bewertungsphase der Verkehrsparameter abhängig von einem Wahrscheinlichkeitsgesetz einer Gleichzeitigkeit einer Vielzahl von Übertragungen auf dem Segment (S1, ... S15) erlangt wird, und wobei in dem Schritt eines Bestimmens die zu verwendende Route (R1, R2) basierend auf der von dem Gleichzeitigkeitsgesetz abhängigen Überlastungswahrscheinlichkeiten bestimmt wird.

6. Optimierungsverfahren nach einem der Ansprüche 1 bis 5, wobei das Verfahren ferner einen Schritt eines Bereitstellens eines Umweltmerkmals umfasst, wobei das Umweltmerkmal mindestens ein Merkmal ist, das ausgewählt ist aus der Liste, bestehend aus: einer geografischen Position von jedem Knoten (N1, ... N6), einer Interferenzwahrscheinlichkeit, einer Lebenserwartung von jedem Knoten (N1, ... N6) und einer Wahrscheinlichkeit für die Zerstörung von jedem Knoten (N1, ... N6).

7. Optimierungsverfahren nach Anspruch 6, wobei die Bewertungsphase die Berechnung eines Indikators für die Belastbarkeit des Kandidaten-Kommunikationsnetzes (40) abhängig von der Überlastungswahrscheinlichkeit und des Umweltmerkmals umfasst, wobei die Auswahlphase des optimierten Kommunikationsnetzes (36) auch den berechneten Indikator für die Belastbarkeit berücksichtigt.

8. Computerprogrammprodukt, umfassend Softwareanweisungen, die, wenn sie von einem Computer ausgeführt werden, ein Verfahren nach einem der Ansprüche 1 bis 7 implementieren.

9. Lesbarer Informationsträger, umfassend Programmanweisungen, die ein Computerprogramm bilden, wobei das Computerprogramm auf eine Datenverarbeitungseinheit geladen werden kann und angepasst ist, um die Durchführung von mindestens einem Schritt eines Verfahrens nach einem der Ansprüche 1 bis 7 zu bewirken, wenn das Computerprogramm auf der Datenverarbeitungseinheit ausgeführt wird.

## Claims

1. A method of optimising a communication network (40) to obtain an optimised communication network (36), the method being computer-implemented, the method comprising:
- an obtaining phase, the obtaining phase comprising a step of:
- obtaining a set of candidate communication networks (40), each candidate communication network (40) comprising a plurality of nodes (N1, ... N6) and a plurality of segments (S1, ... S15) connecting the nodes (N1, ... N6), each segment (S1, ... S15) being suitable for use by a protocol and for providing data transmission capability, at least two distinct protocols being used by the candidate communication network (40), and
- provision of at least one transmission requirement between two nodes (N1, ... N6) of the optimised communication network (36), the transmission requirement comprising at least one of a minimum throughput requirement and a maximum latency requirement;
- an evaluation phase, the evaluation phase comprising, for each transmission requirement and for each candidate communication network (40), a step of:
- obtaining parameters for each segment (S1, ... S15), the parameters comprising a probability of degradation of said transmission capacity and a traffic parameter, the traffic parameter being a parameter relating to transmission rates allocated to said segment (S1, ... S15),
- determination of a route (R1, R2) to be used to establish a communication between the two nodes (N1, ... N6) depending on the transmission requirement, the route (R1, R2) to be used comprising at least one segment (S1, ... S15) and being called a specified route,
- calculation, for each segment (S1, ... S15) of the determined road, a congestion probability of said segment (S1, ... S15) depending on the transmission capacity of said segment (S1, ... S15) and the parameters obtained,
- evaluation of the compliance of the candidate communication network (40) with the transmission requirement according to the congestion probabilities of the segments (S1, ... S15) of the determined route, to obtain an evaluation score, and
- a phase of selecting an optimised communication network (36) from the set of candidate communication networks (40) using the evaluation scores.

2. The optimisation method of claim 1, in which each segment (S1, ... S15) of a candidate communication network (40) is implemented by a protocol selected from a satellite transmission protocol, a mobile phone link protocol, a microwave link protocol and a cable link protocol.

3. Optimisation method according to claim 1 or 2, in which it is determined for each route (R1, R2) connecting the two nodes (N1, ... N6), a road congestion probability as the highest congestion probability of the segments (S1, ... S15) of said route (R1, R2), wherein the route (R1, R2) to be used is selected according to each route congestion probability.

4. The optimisation method according to claim 3, wherein said route congestion probability is compared to a probability threshold, the route (R1, R2) being selected as a candidate route when said route congestion probability is less than the probability threshold, and the route (R1, R2) to be used being selected from the at least one candidate route.

5. An optimisation method according to claim 3 or 4, wherein, in the step of obtaining the evaluation phase, the traffic parameter is obtained according to a probability law of a simultaneity of a plurality of transmissions on the segment (S1, ... S15), and wherein, in the determining step, the route (R1, R2) to be used is determined according to the congestion probabilities depending on said simultaneity law.

6. An optimisation method according to any one of claims 1 to 5, wherein the method further comprises a step of providing an environmental characteristic, the environmental characteristic being at least one characteristic selected from the list consisting of: a geographical position of each node (N1, ... N6), an interference probability, a life expectancy of each node (N1, ... N6) and a probability of destruction of each node (N1, ... N6).

7. The optimisation method according to claim 6, wherein the evaluation phase comprises calculating a resilience indicator of the candidate communication network (40) based on the probability of congestion and the environmental characteristic, the selection phase of the optimised communication network (36) also taking into account the calculated resilience indicator.

8. A computer programme product comprising software instructions which, when run by a computer, implement a method according to any of claims 1 to 7.

9. A readable information carrier comprising programme instructions forming a computer programme, the computer programme being loadable onto a data processing unit and adapted to cause at least one step of a method according to any of claims 1 to 7 to be implemented when the computer programme is implemented on the data processing unit.
